# EUROPEAN PATENT SPECIFICATION

(11) **EP 4 347 493 B1**
(45) Date of publication and mention of the grant of the patent: **01.10.2025**
(21) Application number: 22728037.7
(22) Date of filing: 09.05.2022
(51) Int. Cl.: C01C 1/04, C25B 1/042, F24S 20/00, F25J 3/04

(54) **METHOD AND PLANT FOR PRODUCING AMMONIA**
VERFAHREN UND ANLAGE ZUR HERSTELLUNG VON AMMONIAK
PROCÉDÉ ET INSTALLATION DE PRODUCTION D'AMMONIAC

(30) Priority: 01.06.2021 EP 21020288
(43) Date of publication of application: 10.04.2024
(73) Proprietor: Linde GmbH, 82049 Pullach (DE)
(72) Inventor: LAUTENSCHLAGER, Tobias, 82049 Pullach (DE)
(74) Representative: Grundner, Sebastian
(86) International application number: PCT/EP2022/025213
(87) International publication number: WO 2022/253456

(56) References cited:
- WO-A1-2020/035521
- US-A- 3 401 531
- US-A1- 2012 068 471
- US-A1- 2015 168 058

## Description

The present invention relates to a method for producing ammonia and to a corresponding plant according to the preambles of the independent claims.

### Background

Methods for producing ammonia are known and described, for example, in Appl, M., Ammonia: 2. Production Processes, Ullmann's Encyclopedia of Industrial Chemistry, online publication 15 October 2011, https://doi.org/10.1002/14356007.o02_o1.

Large quantities of conventional ammonia are currently being produced from methane, water and air, using steam methane reforming (SMR) and the Haber-Bosch process. Plants operating according to such a setup are responsible for about 1.8% of global carbon dioxide emissions.

As mentioned, for example, in Wang, G. et al., Renewable production of ammonia and nitric acid, AlChE J. 2020, 66, e16947, https://doi.org/10.1002/aic.16947, the decarbonization of the power sector in ammonia production offers an opportunity to reduce such carbon dioxide emissions.

While electrified ammonia production dates back to the 1920s when the Haber-Bosch process was coupled with a large-scale hydro-powered alkaline water electrolysis, there is still room for improvements, particularly in terms of overall process efficiency and integration of different plant units.

The present invention has the object of providing such improvements.

### Disclosure of the invention

According to the present invention, a method for producing ammonia and a corresponding plant comprising the features of the independent claims is proposed.

Preferred embodiments of the present invention are the subject of the dependent claims and of the description that follows.

The present invention proposes novel integration concepts of an ammonia production unit which is supplied with hydrogen generated by electrolysis (and is therefore adapted to provide "green ammonia") and of an air separation unit which is preferably adapted for a flexible operation in terms of energy usage.

The production of air products in liquid or gaseous state by cryogenic separation of air in air separation plants (cryogenic air separation units) is well known and described, for example, in H.-W. Häring (eds.), Industrial Gases Processing, Wiley-VCH, 2006, especially section 2.2.5, "Cryogenic Rectification".

Air separation plants of the classical type comprise rectification column systems, which can be designed, for example, as two-column systems, especially double-column systems, but also as three- or multi-column systems. In addition to rectification columns for the recovery of nitrogen and/or oxygen in liquid and/or gaseous state, i.e. rectification columns for separation of nitrogen and oxygen, rectification columns can be provided for the recovery of other air components, in particular of noble gases.

The rectification columns of the column systems just mentioned are operated in different pressure ranges. Known double column systems comprise a so-called pressure column (also called high pressure column, medium pressure column or lower column) and a so-called low pressure column (upper column). The high pressure column is typically operated in a pressure range of 4 to 7 bar, especially at about 5.3 bar, whereas the low pressure column is operated in a pressure range of typically 1 to 2 bar, especially at about 1.4 bar. In certain cases, higher pressures can also be used in both rectification columns. The pressures given here and below are absolute pressures at the top of the respective columns. They are typical examples and not intended to limit the scope of the present invention.

It is in some cases preferable to flexibly operate cryogenic air separation units in order to be able to utilize (comparatively) cheap and abundant electrical energy in so-called off peak periods and to reduce consumption of electrical energy when electrical energy is (comparatively) expensive and scarce in so-called peak periods. The terms "peak" and "off-peak" relate to use of electric energy by other consumers such as households, resulting in less or more electric energy being available.

One concept of providing flexibility in electrical energy consumption, which is also used in the context of the present invention, is to use a so-called nitrogen recycle. In an air separation unit using a nitrogen recycle, a stream rich in nitrogen or essentially consisting of nitrogen may be withdrawn from the rectification column system, for example from the low pressure column, to form a recycle stream. The recycle stream is heated in the main heat exchanger, thereafter compressed, cooled, expanded in an expansion turbine to enhance cold-production and reintroduced into the rectification column system, for example as a reflux to the low pressure column or in any other manner conceivable. Alternatively to using nitrogen for the recycle stream, air can be used in a similar manner, which is however an option less preferred according to the present invention.

Depending on the availability of (cheap) electrical energy, the recycle stream may be formed in a larger or smaller amount (or even reduced to zero), directly corresponding to a reduced demand of electrical energy for a compressor (also called recycle nitrogen compressor) used in compressing the recycle stream. In off-peak times when the recycle stream is ramped up, liquid nitrogen is typically stored and reused in times when the recycle stream is ramped down. Storage of liquid nitrogen is possible because of additional cold being "generated" by expanding the recycle stream. In other words, liquid nitrogen may be used to store electrical energy in such plants. Liquid oxygen, liquid air and/or liquid argon may be used in a similar way.

During the periods mentioned, the main air compressor of the air separation unit, being the compressor compressing most or all of the air to be separated or otherwise treated in the air separation unit, is typically run at a constant or only slightly varying duty level in order to keep the rectification (column profiles) in good shape.

### Features and advantages of the present invention

According to the present invention, a method for producing ammonia by catalytically reacting hydrogen provided in a first feed stream and nitrogen provided in a second feed stream is proposed. As mentioned, methods for producing ammonia which are usable according to the present invention are known and may particularly include variants of the classical Haber-Bosch process. They are particularly characterized by the use of high reaction pressures.

The present invention relates to the production of ammonia with a reduced carbon dioxide footprint ("green ammonia"), which is realized, according to the present invention, by hydrogen in the first feed stream at least in part being formed by water electrolysis. Specific types of electrolysis methods and apparatus usable in this connection are further discussed below.

According to the present invention, the nitrogen in the second feed stream is at least in part formed by cryogenic air separation, wherein said cryogenic air separation is performed using an air separation unit comprising a rectification column system as generally known. A recycle stream is, according to the present invention, at least temporarily formed in the air separation unit from a gas stream at least predominantly comprising nitrogen, which is withdrawn from the rectification column system. The recycle stream is, according to the present invention, at least temporarily and in the order indicated, compressed, cooled, expanded and reintroduced into the rectification column system. Further explanations are given above.

Generally, in the language as used herein, a mixture of components, e.g. a gas mixture, may be rich or poor in one or more components. The term "rich" may stand for a content of more than 75%, 80%, 85%, 90%, 95%, 99%, 99.5% or 99.9% while the term "poor" may stand for a content of less than 25%, 20%, 15%, 10%, 5%, 1%, 0.5% or 0.1%, on a molar, weight or volume basis. If reference is made to a stream or a mixture of components "predominantly" comprising one component, the definition given for "rich" may apply for this component. If "nitrogen", "oxygen", "hydrogen" etc. are referred to, this is intended to also include component mixtures being rich the component mentioned.

Further according to the present invention, waste heat from said reacting hydrogen and nitrogen is transferred to a steam system providing steam, and said cooling the recycle stream comprises transferring heat from the recycle stream to the steam system, at least some time periods when the recycle stream is formed.

According to the present invention, and as compared to classical set-ups for producing ammonia, the solutions provided according to the present invention result in a significant reduction of operating costs. According to the present invention, heat which is withdrawn from a nitrogen recycle stream, which is classically dissipated to the atmosphere, may be put to an advantageous use. A particular advantage is that such heat may be provided according to the present invention at a heat level matching the demand of a steam system associated with ammonia production.

The present invention particularly tackles the challenges of green ammonia production with renewable energy sources, resulting in fluctuations in cost and availability depending on solar irradiation and/or wind speed. According to the present invention, large scale green ammonia production may be performed which requires electrolysers with hundreds of megawatts as power input. Such large-scale ammonia reactors are typically not very flexible in terms of ramp-up speed and achievable turndown, such that the hydrogen and nitrogen feed-streams need to be kept rather constant also during peak times while during off-peak times any over-production needs to be stored in buffers. The present invention provides solutions to these problems.

The air separation unit supplying nitrogen as feedstock for green ammonia synthesis is configured, according to the present invention, in a way that allows producing liquid nitrogen (and/or liquid oxygen and/or liquid argon) as by-products and allows maximising power-consumption during low-power tariffs while power-consumption may be minimized during high-power tariffs.

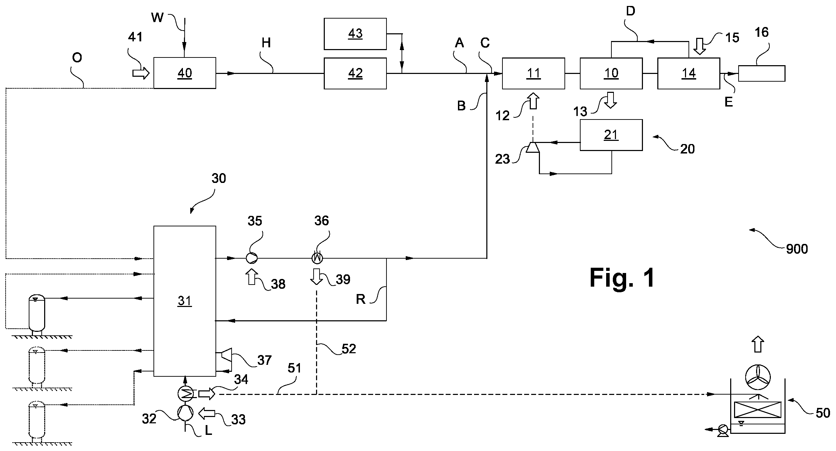

As further explained below in connection with Figure 1, when simply replacing steam methane reforming for producing hydrogen by an electrolyser of a suitable type, the degree of integration between air separation and ammonia production is rather low. The last step of such a process, including ammonia condensation, can either be performed at an absolute pressure of about 12 bar against cooling-water or, when required for unpressurized storage in large tanks, at an absolute pressure of about 1 bar at -33°C. The latter option requires additional shaft power for a refrigeration unit. For performing catalytic ammonia synthesis, pressures of typically 150 to 350 bar are required which are typically obtained with electrical compressors. The temperatures required in ammonia synthesis are typically in the range of 400 to 500 °.

In a particularly preferred embodiment of the present invention, therefore, the steam provided by the steam system is used to generate at least one of electricity and shaft power used in said catalytically reacting hydrogen and nitrogen and/or in at least one method step associated therewith. The latter may particularly include compression of a reactor feed and/or ammonia condensation, as mentioned.

In a further embodiment of the present invention, which at least in part solves the problem of lacking operational flexibility of large-scale ammonia plants, a heat storage system is used. Said transferring heat from the recycle stream to the steam system may comprise transferring at least a part of said heat from the recycle stream to the heat storage system in a first mode of operation and from the heat storage system to the steam system in a second mode of operation. The first mode of operation may particularly correspond to an off-peak period as mentioned above, i.e. to a period where availability of electrical energy is (comparatively) high and/or the costs are (comparatively) low. Correspondingly, the second mode of operation may particularly correspond to a peak period as mentioned above, i.e. to a period where availability of electrical energy is (comparatively) low and the costs are (comparatively) high.

That is, in the first mode of operation a part of the heat not directly utilized in the steam system may be stored for later use in adaptation to the availability and the costs of electrical power during said periods. According to the present invention, any type of heat storage system (e.g. based basalt stones, concrete, ceramics, molten salt etc.) which is adapted to store heat in the temperature range relevant may be used.

In summary, according to the present invention, compressed nitrogen, that is the recycle stream, is used as a medium to transport sensible heat from one or additional heat sources to the boiler system of an ammonia-plant and/or to a heat storage. Once the heat has been transferred to steam and/or heat storage, the nitrogen is sent back to the air separation unit at ambient temperature. The additional heat can either be used to immediately increase steam production and therefore shaft power at a steam-turbine or it can be stored in a heat storage unit as mentioned. The heat stored in the heat storage unit can be shifted between boiler and storage via the nitrogen of the recycle stream. That is, using at least a part of the recycle stream, heat may be transferred from the heat storage unit to the steam system.

According to the invention, in the first mode of operation, a first part of said heat of the recycle stream may be transferred from the recycle stream to the heat storage system. A second part of said heat of the recycle stream may be transferred from the recycle stream to the steam system without being stored in the heat storage system, thus operating the steam system and "loading" the heat storage system in parallel.

In the second mode of operation, in contrast, no heat or less heat than in the first mode of operation is transferred from the recycle stream to the steam system and/or the heat storage system. As mentioned, the formation of the recycle stream may also be stopped completely in the second mode of operation.

As mentioned in other words before, the air separation unit may preferably be operated using a larger amount of electrical power in the first mode of operation as compared to the second mode of operation. In this connection, the recycle stream may preferably be formed in a larger mass flow in the second mode of operation as compared to the first mode of operation (where the mass flow may be zero). Preferably, a main air compressor of the air separation unit may be operated at 75% to 100% duty in the first and the second mode of operation, particularly to keep the concentration profiles in the rectification columns of the air separation unit, as mentioned before.

In a particularly preferred embodiment of the present invention particularly relevant for large-scale plants, said ammonia is liquefied by cooling and, in the first mode of operation, a cryogenic fluid provided by the air separation unit may be used for said cooling of ammonia. This represents a further particularly advantageous integration of air separation and ammonia production.

In the method according to the present invention, said compressing the recycle stream may be performed to result in an absolute pressure of the recycle stream of 25 to 80 bar and/or in a temperature of 120 to 350 °C (due to compression heat). In a particularly preferred embodiment, at least a part of the recycle stream may be further heated from such a temperature level to a temperature of 300 to 1,000 °C after being compressed and before being cooled and thereafter being expanded and reintroduced into the rectification column system. This allows for raising the heat level of the recycle stream to a more valuable range.

Generally, further heating the recycle stream may be performed using at least one of solar, nuclear and waste heat, e.g. waste heat from a steel production unit or the like which may be supplied with oxygen from the air separation unit. Particularly, further heating the recycle stream may be performed using solar heat provided using a heliostat system as generally known. A heliostat as used herein is an apparatus with a plurality of mirrors that reflect sunlight to the same fixed point, regardless of changes in the sun's position in the sky. Heliostats have recently been used in so-called solar tower power plants, in which hundreds of computer-controlled mirrors concentrate their light on an absorber housed in a tower top. The concentration factor of the radiation reaches values of 1,000 and more. In classical heliostat-based power plants, the radiation is converted into heat, which is used to drive a generator by means of steam generation via a conventional turbine. According to the present invention, such heat is directly transferred into the anyhow required steam system of the ammonia production unit and subsequently turned into shaftpower via steam-expansion, at least partially overcoming costs and complexity of classical heliostat-based power plants.

According to the present invention, the heliostat system may comprise a heat absorber mounted to a coldbox of the air separation unit or to a structure of a process unit used for said catalytically reacting hydrogen and nitrogen. In such an embodiment, advantageous use of structures already present on-site may be made.

In one embodiment of the present invention, waste heat of the steam system and/or an ammonia condensation system is used for heating a regeneration gas stream used in a prepurification unit of the air separation unit.

As mentioned, different types of water electrolysis may be used according to the present invention. These may be based in particular on the more classical alkaline electrolysis (AEL), but also on proton exchange membranes (PEM), anion exchange membranes (AEM) or solid oxide electrolysis cells (SOEC). If necessary, various of these technologies can also be used in combination or parallel to each other.

The present invention, in an advantageous embodiment, may be performed using steam as electrolysis feed, such as in an electrolysis based on solid oxide electrolysis cells, said steam used as electrolysis feed being heated using residual heat of the recycle stream after said heat transfer to the steam system. Using steam as electrolysis feed is known to substantial reduce the electrical energy demand of an electrolyser. This allows for additional sensible heat being transported via the dry nitrogen of the recycle stream to manage a high steam flux to the electrolyser during the first mode of operation and a minimal steam-flux to the electrolyser during the second mode of operation.

A plant for producing ammonia by catalytically reacting hydrogen provided in a first feed stream and nitrogen provided in a second feed stream in a reactor unit is also part of the present invention. In this plant, an electrolysis unit is provided which is adapted to form at least a part of the hydrogen in the first feed stream. Furthermore, a cryogenic air separation unit is provided which is adapted to provide at least a part of the nitrogen in the second feed stream. Said air separation unit comprises a rectification column system and is adapted to form a recycle stream from a gas stream at least predominantly comprising nitrogen which is withdrawn from the rectification column system. Recycle stream treatment means are provided which are adapted, in the order indicated, to compress, to cool, to expand and to reintroduce the recycle stream into the rectification column system, and a steam system is provided which is adapted to provide steam from waste heat from said catalytically reacting hydrogen and nitrogen transferred thereto.

According to the present invention, said recycle stream treatment means are adapted to perform said cooling of the recycle stream at least in part by transferring heat from the recycle stream to the steam system.

As to further details and advantages of an inventive plant, reference is made to the explanations above in connection with the method according to the present invention and its embodiments. Particularly, such a plant provided according to the present invention may comprise means adapted to perform a method according to any of the embodiments of the present invention.

The present invention is further described with reference to the appended drawings illustrating embodiments of the present invention.

Short description of the figures
Figure 1 schematically illustrates a plant according to an embodiment not forming part of the present invention.
Figure 2 schematically illustrates a plant according to a preferred embodiment of the present invention.
Figures 3A and 3B schematically illustrate the plant according Figure 2 in a first and a second mode of operation.
Figure 4 schematically illustrates a plant according to a preferred embodiment of the present invention.
Figures 5A and 5B schematically illustrate the plant according Figure 4 in a first and a second mode of operation.
Figure 6 schematically illustrates a plant according to a preferred embodiment of the present invention.
Figures 7A and 7B schematically illustrate the plant according Figure 6 in a first and a second mode of operation.

In the Figures, elements of similar or identical construction and/or function are indicated with like reference numerals. A repeated explanation is omitted for reasons of conciseness. Explanations relating to process units or components likewise relate to corresponding method steps and vice versa.

Figure 1 schematically illustrates a plant 900 according to an embodiment not forming part of the present invention.

A method for producing ammonia by catalytically reacting hydrogen in the plant 900 is implemented by using a reactor unit 10. Reactor unit 10 is supplied with hydrogen provided in a first feed stream A and nitrogen provided in a second feed stream B. Feed streams A and B are, as illustrated, provided at an absolute pressure of about 50 bar and are combined to form a combined feed stream C. Combined feed stream C is subjected to a compression 11 resulting in a suitable pressure level for ammonia synthesis. Energy used for the compression 11 in the form of shaft power of, in an example, 10 MW is indicated with an arrow 12. An arrangement 20 comprising a steam boiler or steam system 21 and a steam turbine 23 is used for this purpose. From the reactor unit 10, thermal energy of, in the example, 35 MW, which is illustrated with an arrow 13 is provided to the steam system 21.

Downstream of the reactor unit 10 a condensation unit 14 is provided. The condensation unit 14 is adapted to condensate ammonia at a temperature of -33 °C. This requires a refrigeration unit (not shown) which is operated, in the example shown, with electrical power of 6 MW, as illustrated by an arrow 15. Uncondensed gas can be recycled to the reactor unit 10, as illustrated with D. An ammonia product stream E is withdrawn from the condensation unit 14 is stored in a tank unit 16.

For providing the first feed stream A, an electrolysis unit 40 is provided which is, in the example shown, adapted to perform electrolysis based on a proton exchange membrane. Liquid water W in an amount of, in the example shown, 70 m³/h is supplied to the electrolysis unit 40. Oxygen O formed in the electrolysis unit may be supplied to an air separation unit 30. The electrolysis unit 40 is, in the example shown, operated with electrical energy in an amount of 396 MW as illustrated with an arrow 41. Gaseous hydrogen H is subjected to a suitable compression 42 and may be buffered, preferably in a compressed state, in a buffer tank 43.

The air separation unit 30 comprises a rectification column system 31 which is shown only schematically. A recycle stream R is at least temporarily formed in the air separation unit 30 from a gas stream at least predominantly comprising nitrogen which is withdrawn from the rectification column system 31. The recycle stream is at least temporarily, in the order indicated, compressed in a compressor 35, cooled in an aftercooler 36, expanded in a valve or a turbine 37 and reintroduced into the rectification column system 31, as not specifically indicated. Together with the recycle stream R, in the example illustrated, nitrogen used in forming the second feed stream B is compressed and cooled. In the compressor 35, as illustrated with an arrow 38, 7 MW of electrical energy is used in average in the example shown. In the aftercooler 36, as illustrated with an arrow 39, thermal energy in an amount of 7 MW is withdrawn in average. The "average" relates in both cases to an median value between a first and second mode of operation as explained before wherein the recycle stream R is formed in different amounts, as mentioned.

Atmospheric air L is supplied to the air separation unit 30 where it is compressed in a main air compressor 32 and thereafter cooled in a cooling unit (not specifically designated). An average power of 3 MW electrical energy is used to drive the main air compressor 32, in the example shown and as illustrated by an arrow 33. An average heat amount of 3 MW thermal energy is withdrawn from the compressed air in the cooling unit, in the example shown and as illustrated by an arrow 34.

As shown with tanks illustrated left of the air separation unit 30, air products such as liquid nitrogen (also used for injection in the second mode of operation), liquid oxygen and liquid argon may be formed in the air separation unit 30.

As shown with dashed arrows 51, 52, heat from the second feed stream B and the recycle stream R as well as from the compressed air L may be dissipated to the atmosphere using a cooling tower 50. The first feed stream A and the second feed stream B are supplied, in the example shown, in amounts of 176 tons per day or 81.6 kNm³/h and 27.5 kNm³/h, respectively. The ammonia product E may be provided in an amount of 1,000 tons per day.

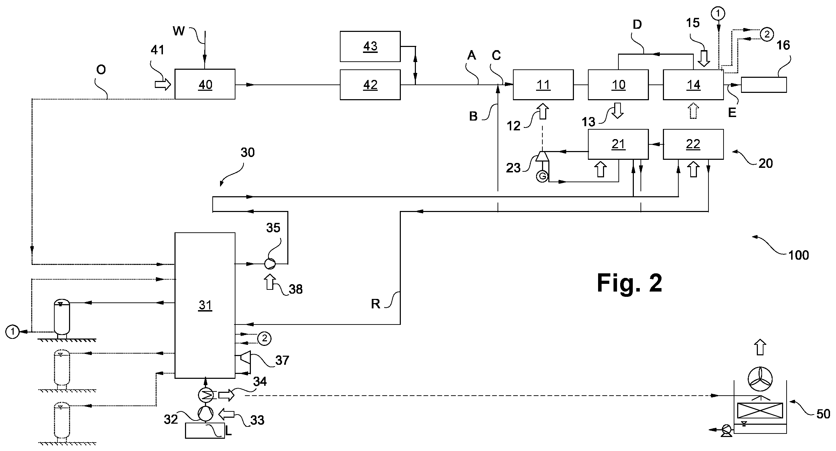

Figure 2 schematically illustrates a plant 100 according to a preferred embodiment of the present invention. The plant 100 shown in Figure 2 essentially differs from the plant 900 shown in Figure 1 in that cooling the recycle stream, which is done in the aftercooler 36 in the plant 900 shown in Figure 1, comprises transferring heat from the recycle stream to the steam system 21.

As shown, a heat storage unit 22 is provided here which is adapted to store, at least in the first mode of operation, heat transferred from the recycle stream R, wherein heat stored in the heat storage unit 22 is, at least in the second mode of operation, transferred to the steam system 21. Surplus heat or steam generated according to this embodiment of the present invention may be used to drive a generator 24 mechanically coupled to the steam 23 turbine at least when it is available.

As shown with connection points 1 and 2, nitrogen and/or cold gas provided by the air separation unit can be used in the ammonia condensation unit 14. An adsorption chiller may also provided but is not specifically illustrated.

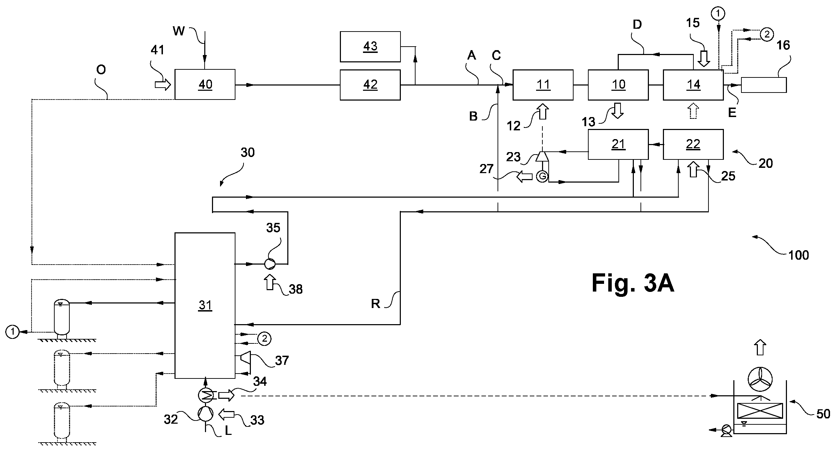

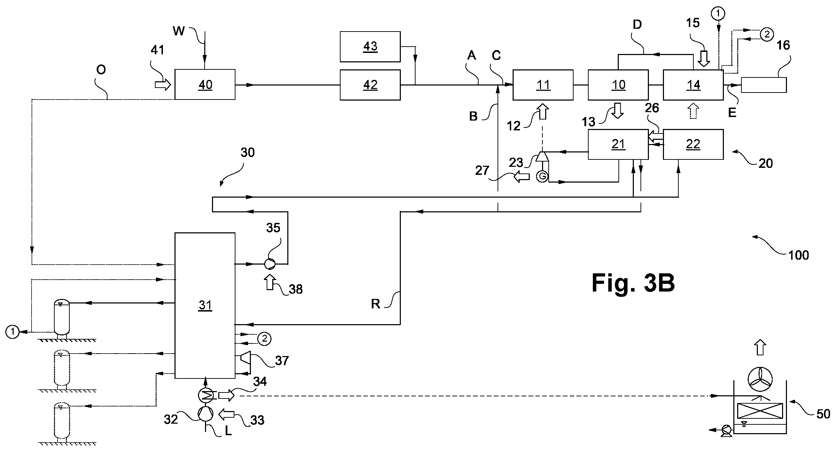

Figures 3A and 3B specifically illustrate the plant 100 according Figure 2 in a first and a second mode of operation as mentioned before. As shown in Figure 3A, heat is stored in the heat storage unit 22 as illustrated with an arrow 25 and as shown in Figure 3B, heat is transferred from the heat storage unit 22 to the steam system 21 as illustrated with an arrow 26. Such heat can be used to provide electrical energy in the generator 24 in an amount of, in the example, 4 MW as illustrated with an arrow 27. Nitrogen used for forming the second feed stream B and the recycle stream R may be provided, as a result of compression, at a temperature of 120 to 350 °C.

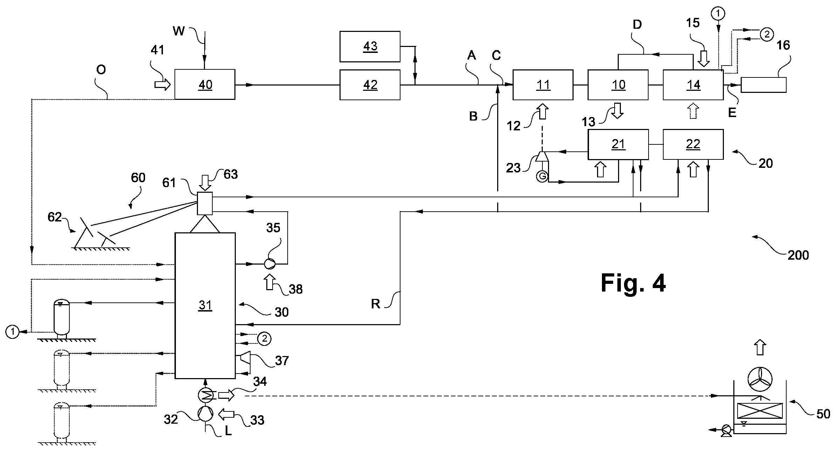

Figure 4 schematically illustrates a plant 200 according to a preferred embodiment of the present invention. The plant 200 shown in Figure 4 essentially differs from the plant 100 shown in Figures 2, 3 and 3A in that a heliostat 60 is provided.

The heliostat 40 is adapted, in the example shown, adapted to heat the nitrogen used for forming the second feed stream B and the recycle stream R to a temperature of 500 to 800 °C in a heat absorber 61 of the heliostat 60, corresponding to a heat amount of, in the example shown, 10 to 20 MW thermal energy, as illustrated with an arrow 63. The heat is provided by using mirrors 62. In this embodiment, additional heat may be provided to the steam system 21.

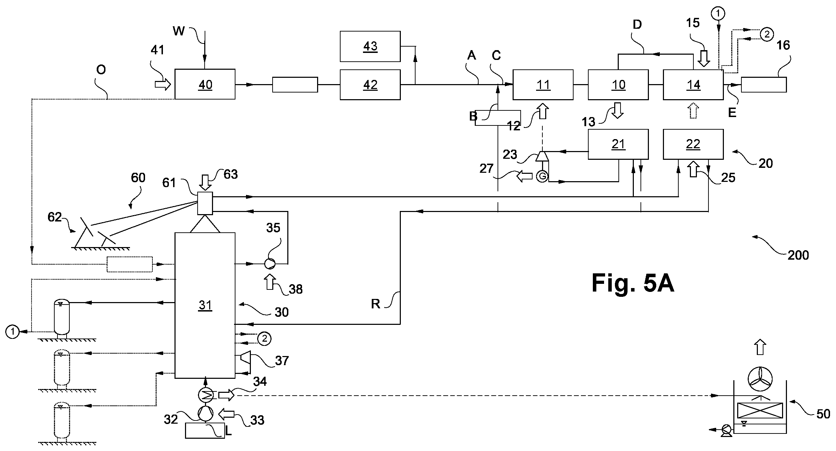

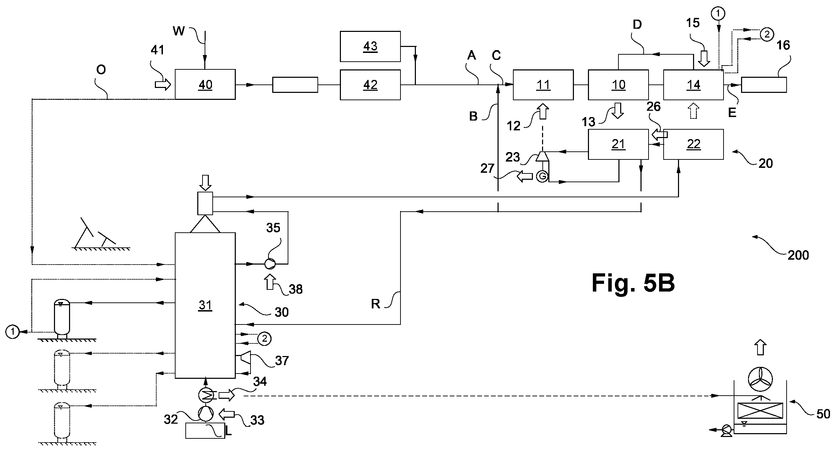

Figures 5A and 5B specifically illustrate the plant 200 according Figure 4 in a first and a second mode of operation as mentioned before. Reference is made to the explanations in connection with Figures 3A and 3B above. In the second mode of operation as illustrated in Figure 5B, no thermal energy is provided in the heliostat and thus the nitrogen used for forming the second feed stream B and the recycle stream R stays at a temperature of 120 to 350 °C.

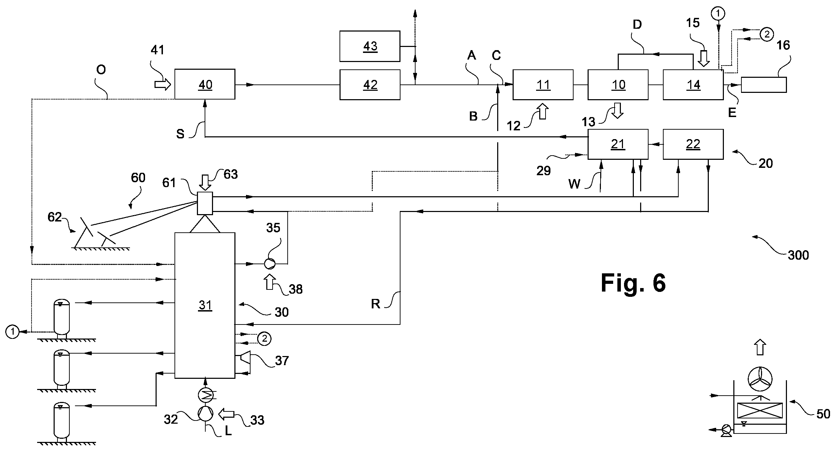

Figure 6 schematically illustrates a plant 300 according to a preferred embodiment of the present invention. The plant 300 shown in Figure 6 essentially differs from the plants 100 and 200 shown in Figures 2, 3 and 3A in that the electrolysis unit 40 is adapted to be operated with a steam stream S instead of liquid water W, e.g. using a solid oxide electrolysis cell. Liquid water W is instead supplied to the steam system 21 which may be fired using e.g. biomass, as illustrated with 29.

Due to the different operation of the electrolysis unit 40, the electrical energy supplied thereto may be reduced to an average amount of 170 MW and hydrogen or the first feed stream A is generated, in average, in an amount of 88 tons per day or 40.8 kNm³/h. Correspondingly, in average, the second feed stream B is provided in an average amount of, in the example, 13.8 kNm³/h. Liquid water W is, in the example shown, provided in an average amount of 35 m³/h. Correspondingly, compression energy is reduced to 5 MW and waste heat to 17.5 MW in average and in the example shown. Likewise, energy used for condensation is reduced to 3 MW in average and the ammonia product stream E is produced in an amount of 500 tons per day. An average of 10 MW of thermal energy is provided to the absorber 61 of the heliostat 60, such that the nitrogen used for forming the second feed stream B and the recycle stream R is heated to a temperature of 300 to 1,000 °C.

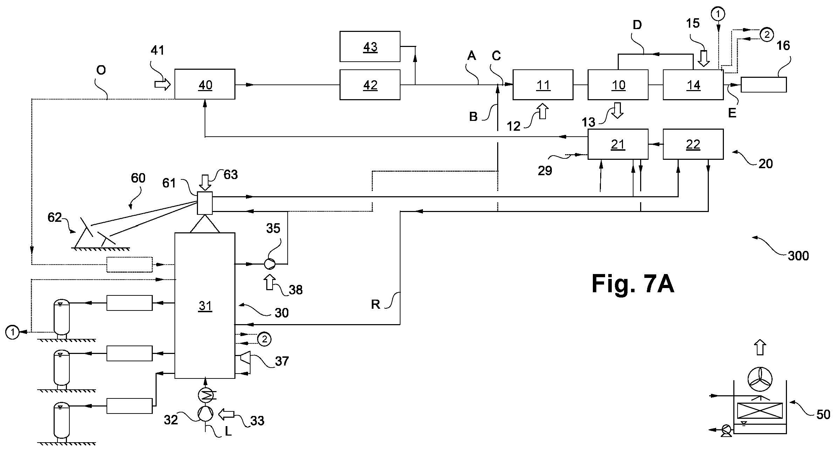

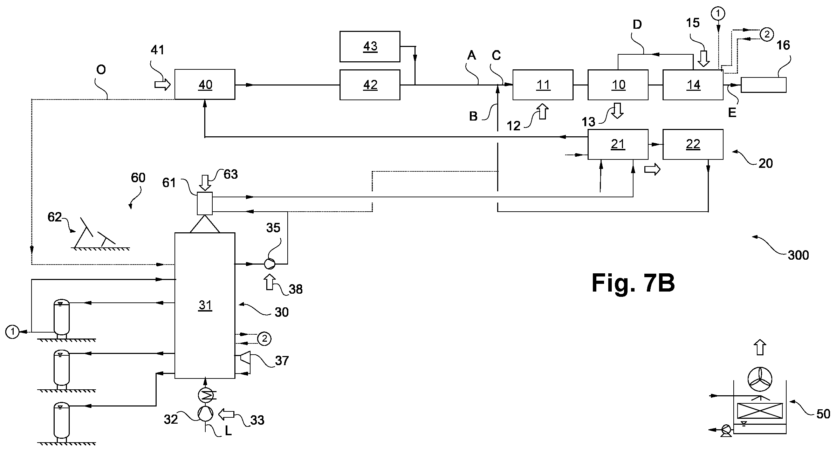

Figures 7A and 7B specifically illustrate the plant 300 according Figure 6 in a first and a second mode of operation as mentioned before. Reference is made to the explanations in connection with Figures 3A and 3B as well as 5A and 5B above.

In an example, the electrical energy supplied to the electrolysis unit 40 is provided in an amount of 290 MW in the first operation mode shown in Figure 7A. Furthermore, in the first operation mode shown in Figure 7A, hydrogen is withdrawn from the electrolysis unit 40 in an amount of 150 tons per day and the first feed stream A is generated in an amount of 106 tons per day or 49.8 kNm³/h. The surplus of 44 tons per day is stored in the buffer unit 43. Correspondingly, the second feed stream B is provided, in the first operation mode shown in Figure 7A, in an amount of 16.5 kNm3/h. Liquid water W is, in the first operation mode shown in Figure 7A, provided in an average amount of 60 m³/h. Correspondingly, 6 MW of compression energy and 21.0 MW are used and provided in the first operation mode shown in Figure 7A. The energy used for condensation stays at 3 MW and the ammonia product stream E is produced in an amount of 600 tons per day in the first operation mode shown in Figure 7A.

In the example, the electrical energy supplied to the electrolysis unit 40 is provided in an amount of only 50 MW in the second operation mode shown in Figure 7B.

Furthermore, in the second operation mode shown in Figure 7B, hydrogen is withdrawn from the electrolysis unit 40 in an amount of only 26 tons per day and the first feed stream A is generated in an amount of 70 tons per day or 32.6 kNm³/h. A makeup amount of 44 tons per day is withdrawn from the buffer unit 43. Correspondingly, the second feed stream B is provided, in the second operation mode shown in Figure 7B, in an amount of 11.0 kNm³/h. Liquid water W is, in the second operation mode shown in Figure 7B, provided in an average amount of 10 m3/h. Correspondingly, 4 MW of compression energy and 14.0 MW are used and provided in the second operation mode shown in Figure 7B. The energy used for condensation stays at 3 MW and the ammonia product stream E is produced in an amount of 400 tons per day in the second operation mode shown in Figure 7B.

In the first operation mode shown in Figure 7A, 25 MW of thermal energy is provided to the absorber 61 of the heliostat 60, such that the nitrogen used for forming the second feed stream B and the recycle stream R is heated to a temperature of 500 to 800 °C. In contrast, in the second mode of operation as illustrated in Figure B, no thermal energy is provided in the heliostat and thus the nitrogen used for forming the second feed stream B and the recycle stream R stays at a temperature of 120 to 350 °C.

## Claims

1. A method for producing ammonia by catalytically reacting hydrogen provided in a first feed stream and nitrogen provided in a second feed stream, the hydrogen in the first feed stream being at least in part formed by water electrolysis and the nitrogen in the second feed stream being at least in part formed by cryogenic air separation, wherein said cryogenic air separation is performed using an air separation unit (30) comprising a rectification column system (31), a recycle stream being at least temporarily formed in the air separation unit (30) from a gas stream at least predominantly comprising nitrogen which is withdrawn from the rectification column system (31), the recycle stream being at least temporarily, in the order indicated, compressed, cooled, expanded and reintroduced into the rectification column system (31), and wherein waste heat from said reacting hydrogen and nitrogen is transferred to a steam system (21) providing steam, **characterized in that** said cooling the recycle stream comprises transferring heat from the recycle stream to the steam system (21).

2. The method according to claim 1, wherein the steam provided by the steam system (21) is used to generate at least one of electricity and shaft power used in said catalytically reacting hydrogen and nitrogen and/or in at least one method step associated therewith.

3. The method according to claim 1 or 2, wherein a heat storage system (22) is used and said transferring heat from the recycle stream to the steam system (21) comprises transferring at least a part of said heat from the recycle stream to the heat storage system (22) in a first mode of operation and from the heat storage system (22) to the steam system (21) in a second mode of operation.

4. The method according to claim 3, wherein, in the first mode of operation, a first part of said heat of the recycle stream is transferred from the recycle stream to the heat storage system (21) and a second part of said heat of the recycle stream is transferred from the recycle stream to the steam system (21) without being stored in the heat storage system (22).

5. The method according to claim 3 or 4, wherein, in the second mode of operation, no heat or less heat than in the first mode of operation is transferred from the recycle stream to the steam system (21) and/or the heat storage system (22).

6. The method according to any of claims 3 to 5, wherein the air separation unit (30) is operated using a larger amount of electrical power in the first mode of operation as compared to the second mode of operation and/or wherein the recycle stream is formed in a larger mass flow in the second mode of operation as compared to the first mode of operation and/or wherein a main air compressor (32) of the air separation unit (30) is operated at 75% to 100% duty in the first and the second mode of operation.

7. The method according to any of claims 3 to 6, wherein said ammonia is liquefied by cooling, and wherein, in the first mode of operation, a cryogenic fluid provided by the air separation unit (30) is used for said cooling of ammonia.

8. The method according to any of the preceding claims, wherein said compressing the recycle stream is performed to result in an absolute pressure of the recycle stream of 25 to 80 bar and/or in a temperature of 120 to 300 °C.

9. The method according to any one of the preceding claims, wherein at least a part of the recycle stream is further heated to a temperature of 300 to 1,000 °C after being compressed and before being cooled, expanded and reintroduced into the rectification column system.

10. The method according to claim 9, wherein further heating the recycle stream is performed using at least one of solar, nuclear and waste heat.

11. The method according to claim 10, wherein further heating the recycle stream is performed using solar heat provided using a heliostat system (60).

12. The method according to claim 11, wherein the heliostat system comprises a heat absorber (61) mounted to a coldbox of the air separation unit or to a structure of a process unit used for said catalytically reacting hydrogen and nitrogen.

13. The method according to any one of the preceding claims, wherein waste heat of the steam system and/or an ammonia condensation system is used for heating a regeneration gas stream used in a prepurification unit of the air separation unit.

14. The method according to any one of the preceding claims, wherein said water electrolysis is performed using steam as electrolysis feed, said steam used as electrolysis feed being heated using residual heat of the recycle stream after said heat transfer to the steam system.

15. A plant (100, 200) for producing ammonia by catalytically reacting hydrogen provided in a first feed stream and nitrogen provided in a second feed stream in a reactor unit (10), wherein an electrolysis unit (40) is provided which is adapted to form at least a part of the hydrogen in the first feed stream and wherein a cryogenic air separation unit (30) is provided which is adapted to provide at least a part of the nitrogen in the second feed stream, wherein said air separation unit comprises a rectification column system (31) and is adapted to form a recycle stream from a gas stream at least predominantly comprising nitrogen which is withdrawn from the rectification column system (31), and where recycle stream treatment means are provided which are adapted, in the order indicated, to compress, to cool, to expand and to reintroduce the recycle stream into the rectification column system (31), and wherein a steam system (21) is provided which is adapted to provide steam from waste heat from said catalytically reacting hydrogen and nitrogen transferred thereto, **characterized in that** said recycle stream treatment means are adapted to perform said cooling of the recycle stream at least in part by transferring heat from the recycle stream to the steam system.

## Patentansprüche

1. Verfahren zur Herstellung von Ammoniak durch katalytische Reaktion von Wasserstoff, der in einem ersten Zuführungsstrom bereitgestellt wird, und Stickstoff, der in einem zweiten Zuführungsstrom bereitgestellt wird, wobei der Wasserstoff in dem ersten Zuführungsstrom zumindest teilweise durch Wasserelektrolyse gebildet wird und der Stickstoff in dem zweiten Zuführungsstrom zumindest teilweise durch Tieftemperaturluftzerlegung gebildet wird, wobei die Tieftemperaturluftzerlegung unter Verwendung einer Luftzerlegungseinheit (30) durchgeführt wird, die ein Rektifikationskolonnensystem (31) umfasst, wobei ein Rückführstrom zumindest zeitweise in der Luftzerlegungseinheit (30) aus einem Gasstrom gebildet wird, der zumindest überwiegend Stickstoff umfasst, der aus dem Rektifikationssäulensystem (31) abgezogen wird, wobei der Rückführstrom zumindest zeitweise in der angegebenen Reihenfolge komprimiert, gekühlt, expandiert und wieder in das Rektifikationssäulensystem (31) eingeleitet wird, und wobei Abwärme aus dem reagierenden Wasserstoff und Stickstoff an ein Dampfsystem (21) übertragen wird, das Dampf bereitstellt, **dadurch gekennzeichnet, dass** das Kühlen des Rückführstroms das Übertragen von Wärme aus dem Rückführstrom an das Dampfsystem (21) umfasst.

2. Verfahren nach Anspruch 1, wobei der vom Dampfsystem (21) bereitgestellte Dampf zur Erzeugung von Elektrizität und/oder Wellenenergie verwendet wird, die bei der katalytischen Reaktion von Wasserstoff und Stickstoff und/oder in mindestens einem damit verbundenen Verfahrensschritt verwendet wird.

3. Verfahren nach Anspruch 1 oder 2, wobei ein Wärmespeichersystem (22) verwendet wird und das Übertragen von Wärme aus dem Rückführstrom auf das Dampfsystem (21) das Übertragen mindestens eines Teils der Wärme aus dem Rückführstrom auf das Wärmespeichersystem (22) in einem ersten Betriebsmodus und vom Wärmespeichersystem (22) auf das Dampfsystem (21) in einem zweiten Betriebsmodus umfasst.

4. Verfahren nach Anspruch 3, wobei in dem ersten Betriebsmodus ein erster Teil der Wärme des Rückführstroms von dem Rückführstrom an das Wärmespeichersystem (21) übertragen wird und ein zweiter Teil der Wärme des Rückführstroms von dem Rückführstrom an das Dampfsystem (21) übertragen wird, ohne in dem Wärmespeichersystem (22) gespeichert zu werden.

5. Verfahren nach Anspruch 3 oder 4, wobei in dem zweiten Betriebsmodus keine oder weniger Wärme als im ersten Betriebsmodus aus dem Rückführstrom an das Dampfsystem (21) und/oder das Wärmespeichersystem (22) übertragen wird.

6. Verfahren nach einem der Ansprüche 3 bis 5, wobei die Luftzerlegungsanlage (30) in dem ersten Betriebsmodus mit einer größeren elektrischen Energie betrieben wird als in dem zweiten Betriebsmodus und/oder wobei der Rückführstrom in dem zweiten Betriebsmodus mit einem größeren Massenstrom gebildet wird als in dem ersten Betriebsmodus und/oder wobei ein Hauptluftkompressor (32) der Luftzerlegungsanlage (30) in dem ersten und dem zweiten Betriebsmodus mit einer Auslastung von 75 % bis 100 % betrieben wird.

7. Verfahren nach einem der Ansprüche 3 bis 6, wobei das Ammoniak durch Kühlen verflüssigt wird und wobei in der ersten Betriebsart ein von der Luftzerlegungseinheit (30) bereitgestelltes Tieftemperaturfluid für die Kühlung des Ammoniaks verwendet wird.

8. Verfahren nach einem der vorstehenden Ansprüche, wobei das Verdichten des Rückführstroms durchgeführt wird, um einen absoluten Druck des Rückführstroms von 25 bis 80 bar und/oder eine Temperatur von 120 bis 300 °C zu erreichen.

9. Verfahren nach einem der vorstehenden Ansprüche, wobei zumindest ein Teil des Rückführstroms nach dem Verdichten und vor dem Abkühlen, Expandieren und Wiedereinleiten in das Rektifikationskolonnensystem auf eine Temperatur von 300 bis 1000 °C weiter erhitzt wird.

10. Verfahren nach Anspruch 9, wobei das weitere Erhitzen des Rücklaufstroms unter Verwendung von mindestens einem von Solar-, Kern- und Abwärme durchgeführt wird.

11. Verfahren nach Anspruch 10, wobei das weitere Erhitzen des Rücklaufstroms unter Verwendung von Sonnenwärme erfolgt, die unter Verwendung eines Heliostat-Systems (60) bereitgestellt wird.

12. Verfahren nach Anspruch 11, wobei das Heliostatensystem einen Wärmeabsorber (61) umfasst, der an einer Coldbox der Luftzerlegungsanlage oder an einer Struktur einer Prozesseinheit montiert ist, die für die katalytische Reaktion von Wasserstoff und Stickstoff verwendet wird.

13. Verfahren nach einem der vorstehenden Ansprüche, wobei Abwärme des Dampfsystems und/oder eines Ammoniakkondensationssystems zum Erhitzen eines Regenerationsgasstroms verwendet wird, der in einer Vorreinigungseinheit der Luftzerlegungsanlage verwendet wird.

14. Verfahren nach einem der vorstehenden Ansprüche, wobei die Wasserelektrolyse unter Verwendung von Dampf als Elektrolysezufuhr durchgeführt wird, wobei der als Elektrolysezufuhr verwendete Dampf unter Verwendung der Restwärme des Rückführstroms nach der Wärmeübertragung an das Dampfsystem erhitzt wird.

15. Anlage (100, 200) zur Herstellung von Ammoniak durch katalytische Reaktion von Wasserstoff, der in einem ersten Zufuhrstrom bereitgestellt ist, und Stickstoff, der in einem zweiten Zufuhrstrom bereitgestellt ist, in einer Reaktoreinheit (10), wobei eine Elektrolyseeinheit (40) bereitgestellt wird, die so angepasst ist, dass sie mindestens einen Teil des Wasserstoffs in dem ersten Zufuhrstrom bildet, und wobei eine Tieftemperaturluftzerlegungseinheit (30) bereitgestellt wird, die so angepasst ist, dass sie mindestens einen Teil des Stickstoffs in dem zweiten Zufuhrstrom bereitstellt, wobei die Luftzerlegungseinheit ein Rektifikationssäulensystem (31) umfasst und angepasst ist, um einen Rückführstrom aus einem Gasstrom zu bilden, der zumindest überwiegend Stickstoff umfasst, der aus dem Rektifikationssäulensystem (31) abgezogen wird, und wobei Mittel zur Behandlung des Rückführstroms vorgesehen sind, die dazu geeignet sind, den Rückführstrom in der angegebenen Reihenfolge zu komprimieren, zu kühlen, zu expandieren und wieder in das Rektifikationssäulensystem (31) einzuführen, und wobei ein Dampfsystem (21) bereitgestellt ist, das dazu angepasst ist, aus der Abwärme des katalytisch reagierenden Wasserstoffs und des dorthin übertragenen Stickstoffs Dampf zu erzeugen, **dadurch gekennzeichnet, dass** die Mittel zur Behandlung des Rückführstroms dazu angepasst sind, die Kühlung des Rückführstroms zumindest teilweise durch Übertragung von Wärme aus dem Rückführstrom auf das Dampfsystem durchzuführen.

## Revendications

1. Procédé de production d'ammoniac par réaction catalytique d'hydrogène fourni dans un premier courant d'alimentation et d'azote fourni dans un second courant d'alimentation, l'hydrogène dans le premier courant d'alimentation étant au moins en partie formé par électrolyse d'eau et l'azote dans le second courant d'alimentation étant au moins en partie formé par séparation cryogénique d'air, dans lequel ladite séparation cryogénique d'air est effectuée à l'aide d'une unité de séparation d'air (30) comprenant un système de colonne de rectification (31), un courant de recyclage étant au moins temporairement formé dans l'unité de séparation d'air (30) à partir d'un courant de gaz comprenant au moins principalement de l'azote qui est soutiré du système de colonne de rectification (31), le courant de recyclage étant au moins temporairement, dans l'ordre indiqué, comprimé, refroidi, détendu et réintroduit dans le système de colonne de rectification (31), et dans lequel la chaleur résiduelle de ladite réaction de l'hydrogène et de l'azote est transférée à un système de vapeur d'eau (21) fournissant de la vapeur d'eau, **caractérisé en ce que** ledit refroidissement du courant de recyclage comprend le transfert de la chaleur du courant de recyclage au système de vapeur d'eau (21).

2. Procédé selon la revendication 1, dans lequel la vapeur d'eau fournie par le système de vapeur d'eau (21) est utilisée pour générer au moins l'une parmi de l'électricité et de la puissance à l'arbre utilisée dans ladite réaction catalytique de l'hydrogène et de l'azote et/ou dans au moins une étape du procédé qui y est associé.

3. Procédé selon la revendication 1 ou 2, dans lequel un système de stockage de chaleur (22) est utilisé et ledit transfert de chaleur du courant de recyclage au système de vapeur d'eau (21) comprend le transfert d'au moins une partie de ladite chaleur du courant de recyclage au système de stockage de chaleur (22) dans un premier mode de fonctionnement et du système de stockage de chaleur (22) au système de vapeur d'eau (21) dans un second mode de fonctionnement.

4. Procédé selon la revendication 3, dans lequel, dans le premier mode de fonctionnement, une première partie de ladite chaleur du courant de recyclage est transférée du courant de recyclage au système de stockage de chaleur (21) et une seconde partie de ladite chaleur du courant de recyclage est transférée du courant de recyclage au système de vapeur d'eau (21) sans être stockée dans le système de stockage de chaleur (22).

5. Procédé selon la revendication 3 ou 4, dans lequel, dans le second mode de fonctionnement, aucune chaleur n'est transférée ou moins de chaleur que dans le premier mode de fonctionnement est transférée du courant de recyclage au système de vapeur d'eau (21) et/ou au système de stockage de chaleur (22).

6. Procédé selon l'une quelconque des revendications 3 à 5, dans lequel l'unité de séparation d'air (30) fonctionne en utilisant une plus grande quantité d'énergie électrique dans le premier mode de fonctionnement par rapport au second mode de fonctionnement et/ou dans lequel le courant de recyclage est formé dans un plus grand débit massique dans le second mode de fonctionnement par rapport au premier mode de fonctionnement et/ou dans lequel un compresseur d'air principal (32) de l'unité de séparation d'air (30) fonctionne à un taux de 75 % à 100 % dans le premier et le second mode de fonctionnement.

7. Procédé selon l'une quelconque des revendications 3 à 6, dans lequel ledit ammoniac est liquéfié par refroidissement, et dans lequel, dans le premier mode de fonctionnement, un fluide cryogénique fourni par l'unité de séparation d'air (30) est utilisé pour ledit refroidissement de l'ammoniac.

8. Procédé selon l'une quelconque des revendications précédentes, dans lequel ladite compression du courant de recyclage est effectuée de manière à obtenir une pression absolue du courant de recyclage de 25 à 80 bars et/ou une température de 120 à 300 °C.

9. Procédé selon l'une quelconque des revendications précédentes, dans lequel au moins une partie du courant de recyclage est encore chauffée à une température comprise entre 300 et 1 000 °C après avoir été comprimée et avant d'être refroidie, expansée et réintroduite dans le système de colonne de rectification.

10. Procédé selon la revendication 9, dans lequel un chauffage supplémentaire du courant de recyclage est effectué en utilisant l'une parmi chaleur solaire, nucléaire et résiduelle.

11. Procédé selon la revendication 10, dans lequel un chauffage supplémentaire du courant de recyclage est effectué en utilisant de la chaleur solaire fournie par un système d'héliostat (60).

12. Procédé selon la revendication 11, dans lequel le système d'héliostat comprend un absorbeur de chaleur (61) monté sur une chambre froide de l'unité de séparation d'air ou sur une structure d'une unité de traitement utilisée pour ladite réaction catalytique de l'hydrogène et de l'azote.

13. Procédé selon l'une quelconque des revendications précédentes, dans lequel la chaleur résiduelle du système de vapeur d'eau et/ou d'un système de condensation d'ammoniac est utilisée pour chauffer un courant de gaz de régénération utilisé dans une unité de prépurification de l'unité de séparation d'air.

14. Procédé selon l'une quelconque des revendications précédentes, dans lequel ladite électrolyse d'eau est réalisée en utilisant de la vapeur d'eau comme alimentation d'électrolyse, ladite vapeur d'eau utilisée comme alimentation d'électrolyse étant chauffée en utilisant la chaleur résiduelle du courant de recyclage après ledit transfert de chaleur au système de vapeur d'eau.

15. Installation (100, 200) permettant de produire de l'ammoniac par réaction catalytique d'hydrogène fourni dans un premier courant d'alimentation et d'azote fourni dans un second courant d'alimentation dans une unité de réacteur (10), dans laquelle une unité d'électrolyse (40) est prévue, laquelle est adaptée pour former au moins une partie de l'hydrogène dans le premier courant d'alimentation et dans laquelle une unité de séparation cryogénique d'air (30) est prévue, laquelle est adaptée pour fournir au moins une partie de l'azote dans le second courant d'alimentation, dans laquelle ladite unité de séparation d'air comprend un système de colonne de rectification (31) et est adaptée pour former un courant de recyclage à partir d'un courant de gaz comprenant au moins principalement de l'azote qui est soutiré du système de colonne de rectification (31), et où des moyens de traitement de courant de recyclage sont prévus lesquels sont adaptés, dans l'ordre indiqué, pour comprimer, refroidir, détendre et réintroduire le courant de recyclage dans le système de colonne de rectification (31), et dans laquelle un système de vapeur d'eau (21) est prévu, lequel est adapté pour fournir de la vapeur d'eau à partir de la chaleur résiduelle de ladite réaction catalytique de l'hydrogène et de l'azote qui lui est transférée, **caractérisée en ce que** lesdits moyens de traitement de courant de recyclage sont adaptés pour effectuer ledit refroidissement du courant de recyclage au moins en partie en transférant la chaleur du courant de recyclage au système de vapeur d'eau.
